# FASCICULE DE BREVET EUROPEEN

(11) **EP 1 327 345 B1**
(45) Date de publication et mention de la délivrance du brevet: **13.09.2006**
(21) Numéro de dépôt: 01978561.7
(22) Date de dépôt: 18.10.2001
(51) Int. Cl.: H04L 29/06

(54) **PROCEDE DE CONTROLE D'ACCES A DES ADRESSES DE SITES INTERNET**
VERFAHREN ZUR INTERNETADRESSE-ZUGANGSKONTROLLE
METHOD FOR CONTROLLING ACCESS TO INTERNET SITES

(30) Priorité: 19.10.2000 FR 0013410
(43) Date de publication de la demande: 16.07.2003
(73) Titulaire: FRANCE TELECOM, 75015 Paris (FR)
(72) Inventeur: HENAFF, Mari-Mai, F-22300 Rospez (FR); AUBERTIN, Laurent, F-22700 Louannec (FR)
(74) Mandataire: Bentz, Jean-Paul
(86) Numéro de dépôt international: PCT/FR2001/003223
(87) Numéro de publication internationale: WO 2002/033933

(56) Documents cités:
- EP-A- 0 992 873
- WO-A-96/42041
- US-A- 5 875 296

## Description

L'invention concerne un procédé de contrôle d'accès aux adresses de sites Internet. Elle concerne également un dispositif permettant de contrôler l'accès à des adresses données de sites Internet, communiquée en général par envoi de message électronique (e-mail).

Une adresse de site Internet est couramment dénommée par l'acronyme URL. Cet acronyme sera repris dans toute la suite de la description.

La création de site en ligne est devenue relativement aisée. Le nombre de pages personnelles, par conséquent d'URL, augmente régulièrement. En général les informations présentées sur les sites sont accessibles sans restriction.

Cependant, pour répondre à de nouveaux besoins, le concepteur d'un site souhaite restreindre l'accès de tout ou partie du site à une liste de personnes identifiées.

Cette tâche est d'autant plus difficile que la transmission d'adresses, c'est à dire d'URL, dans des messages électroniques est pratique courante. En effet, lors de la lecture d'un tel message, un clic sur l'URL active un navigateur qui se connecte directement sur le site correspondant. On comprend que la possibilité de transférer un message comprenant une URL rend encore plus difficile le contrôle des destinataires qui auront connaissance de l'URL.

Un moyen connu à ce jour, mais insuffisant en cas de transfert, pour restreindre l'accès à un site est de le protéger par identifiant de connexion (dans la suite dénommé « login ») et mot de passe, et de ne diffuser ces informations qu'aux personnes autorisées (voir par exemple le document WO-A-96/42041). Rien cependant n'interdit à ces personnes de transmettre cette information à d'autres personnes sans en avertir l'émetteur du message.

Le problème rencontré est donc de permettre au concepteur d'un site en ligne de contrôler l'accès audit site pour n'en autoriser l'accès qu'à des utilisateurs autorisés.

Corrélativement à ce problème, un autre problème est de pouvoir transmettre l'URL du site dans un message électronique en s'assurant que seul les destinataires initiaux donc autorisés pourront y accéder.

Ainsi il sera possible d'interdire l'accès du site aux destinataires secondaires du message (ceux à qui le message a été transféré dans un deuxième temps).

On cherche également à éviter à l'émetteur du message une gestion complexe de login et mot de passe.

Pour résoudre ces problèmes, l'invention propose un procédé de contrôle d'accès à un ou plusieurs sites Internet, principalement caractérisé en ce qu'il consiste à :
- enregistrer lesdits sites dans un service d'hébergement,
- enregistrer des informations d'identification d'utilisateurs du service d'hébergement et des informations pour chacun desdits utilisateurs comprenant des droits d'accés à un ou plusieurs des sites hébergés,
- vérifier pour toute demande d'accès à une adresse d'un site hébergé si cette demande émane d'un utilisateur enregistré et si cet utilisateur a des droits pour l'accès à cette adresse.

Selon une autre caractéristique une demande d'accès à une adresse d'un site hébergé peut résulter d'une sélection de ladite adresse dans un message électronique.

Selon le procédé on pourra effectuer une mise à jour des enregistrements des utilisateurs et des informations sur les droits qui leurs sont accordés.

Les informations sur les droits accordés comportent la ou les adresses des sites accessibles.

Les informations sur les droits accordés peuvent comporter outre la ou les adresses, une donnée représentant une durée de validité du droit accordé.

L'invention concerne également un dispositif de contrôle d'accès à des adresses de sites Internet, principalement caractérisé en ce qu'il comprend :
- des moyens d'hébergement pour enregistrer lesdits sites et fournir un service d' hébergement,
- des moyens pour enregistrer des informations d'identification d'utilisateurs du service d'hébergement et des informations pour chacun desdits utilisateurs comprenant des droits d'accès à un ou plusieurs des sites hébergés,
- des moyens pour vérifier pour toute demande d'accès à une adresse d'un site hébergé si cette demande émane d'un utilisateur enregistré et si cet utilisateur a des droits pour l'accès à cette adresse.

Selon une autre caractéristique du dispositif, les moyens d'hébergement sont réalisés par un serveur constituant le service d'hébergement.

Selon une autre caractéristique du dispositif, les moyens pour enregistrer des informations d'identification sont réalisés par un serveur constituant une base de données utilisateurs.

Selon une autre caractéristique du dispositif, les moyens pour vérifier les demandes d'accès sont réalisés par un serveur.

Selon.un mode de réalisation, les serveurs sont des serveurs distincts reliés physiquement et logiquement entre eux.

L'invention concerne également un serveur d'hébergement de sites Internet principalement caractérisé en ce qu'il comprend des moyens de couplage à un serveur constituant une base utilisateurs, un ou plusieurs utilisateurs étant titulaires des sites hébergés et des moyens de couplage à un serveur comprenant un module de gestion des adresses des sites et des droits d'accès à ces adresses pour chaque utilisateur de la base.

L'invention concerne aussi un serveur de gestion principalement caractérisé en ce qu'il comprend un module de gestion des adresses de sites Internet et d'informations concernant des droits d'accès à ces adresses pour des utilisateurs et des moyens de couplage à un serveur sur lequel sont enregistrées des informations d'identification desdits utilisateurs, ce serveur constituant une base utilisateurs.

Et enfin l'invention concerne un serveur de base utilisateurs principalement caractérisé en ce qu'il comprend des moyens d'enregistrement d'informations d'identification d'utilisateurs d'un service d'hébergement de sites Internet, des moyens de couplage à un serveur assurant ledit service d'hébergement et des moyens de couplage à un serveur comprenant un module de gestion des adresses de sites Internet hébergés et d'informations concernant des droits d'accès à ces adresses pour les utilisateurs.

D'autres particularités et avantages de l'invention apparaîtront clairement à la lecture de la description qui est faite ci après et en regard des dessins sur lesquels :
La figure 1, représente l'architecture d'un système d'accès à des sites Internet comprenant un dispositif de contrôle selon l'invention ;
La figure 2 représente l'architecture d'un tel système dans le cas où les URL sont transmises par messagerie électronique.

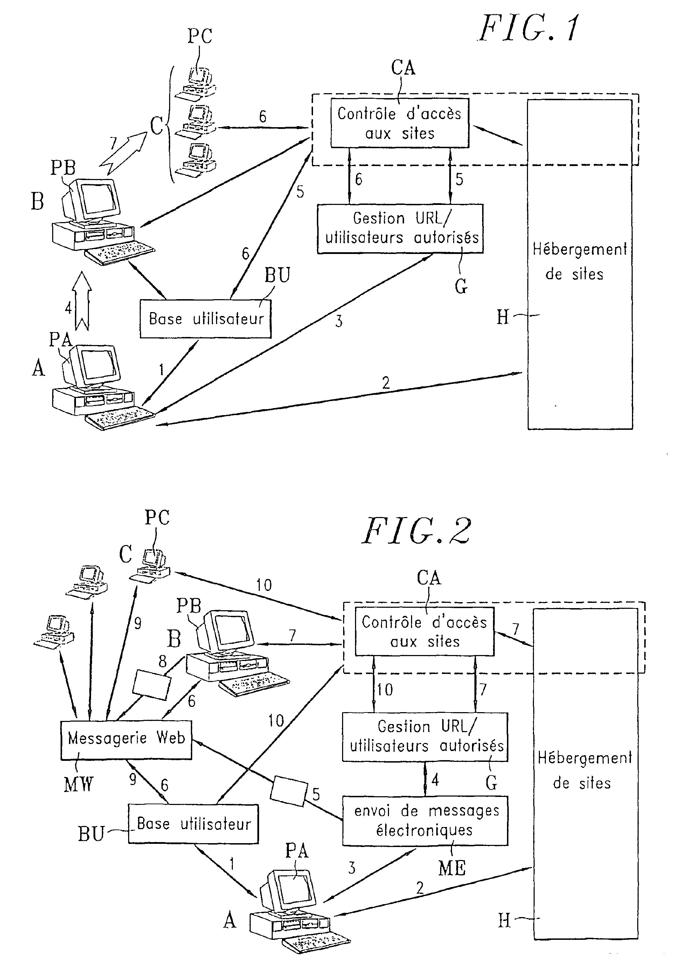

Le dispositif de contrôle illustré par la figure 1 comprend :
- Une base utilisateur BU qui gère l'inscription des utilisateurs et valide leur authentification pour l'accès au service d'hébergement.
- Un service d'hébergement H de sites personnels couplé à la base utilisateur BU, comprenant un ou plusieurs serveurs d'hébergement;
- Un module G qui gère pour chaque adresse (URL) de sites hébergés, des informations portant les droits d'accès à ces adresses pour les utilisateurs enregistrés sur la base. Ces informations peuvent se présenter simplement sous la forme d'une liste d'utilisateurs autorisés constituée par des données d'identification de chaque utilisateur associées aux adresses accessibles pour chacun.

Ces éléments sont reliés fonctionnellement c'est à dire, couplés physiquement et logiquement. Il n'est cependant pas nécessaire qu'ils soient regroupés sur une même unité fonctionnelle.

En effet, la base utilisateur BU peut être constituée par un premier serveur de base de données, le service d'hébergement H peut être réalisé par un deuxième serveur, tandis que le module G qui gère pour chaque adresse de sites hébergés, des informations portant les droits d'accès à ces adresses, peut être constitué par un troisième serveur.

Le dispositif de contrôle comprend en outre un module de contrôle CA connu en soi et qui est en pratique réalisé par un programme placé en début de programme d'un site et se déclenchant lorsque ce site est appelé. La fonction réalisée par ce module CA (ce programme) est l'authentification d'un utilisateur désirant accéder au site concerné, par vérification du login de l'utilisateur désirant consulter le site et de son mot de passe.

Dans l'architecture générale d'un système permettant d'accéder à un site, telle que représentée sur cette figure, on trouvera bien entendu des postes d'utilisateurs PA, PB, PC (des micro-ordinateurs ou station) équipés d'outils informatiques aptes à accéder à des sites Internet c'est à dire en particulier, équipés d'un navigateur.

Dans cette architecture on peut disposer également de modules d'envoi de messages électroniques non représentés sur cette figure et d'un service de messagerie Web couplé à la base utilisateur BU.

Le procédé de contrôle selon l'invention comprend les étapes suivantes :

Au préalable, l'enregistrement des sites dans le service d'hébergement par chaque utilisateur désirant bénéficier de ce service,

L'enregistrement des informations d'identification des utilisateurs du service d'hébergement et des informations pour chacun desdits utilisateurs comprenant des droits d'accès à un ou plusieurs des sites hébergés,

La vérification pour toute demande d'accès à une adresse d'un site hébergé si cette demande émane d'un utilisateur enregistré et si cet utilisateur a des droits pour l'accès à cette adresse.

Afin de mieux comprendre on va décrire dans ce qui suit le mécanisme de contrôle de façon plus détaillée, et dont les liens logiques sont illustrés par les numéros 1 à 7 sur la figure :

Pour bénéficier du contrôle d'accès, l'inscription préalable des utilisateurs dans la base utilisateur est requise.
1- Un utilisateur A doit donc s'inscrire dans la base utilisateur.
2- Cet utilisateur A peut ensuite composer un site personnel sur le serveur d'hébergement (plusieurs serveurs peuvent bien entendu être prévus).
3- L'utilisateur A s'inscrit dans la base des utilisateurs du service d'hébergement et choisit un ou des utilisateurs B également inscrits dans la base utilisateurs BU. En utilisant le module G de gestion des URL/utilisateurs autorisés, il indique quels utilisateurs pourront accéder à quels URL à ce module.
4- L'utilisateur A communique les URL de ses sites aux personnes B de son choix par n'importe quel moyen (oralement, fax, courrier, etc.)
5- Après réception des ces informations (droits d'accès aux différentes adresses URL autorisées par A), l'utilisateur B peut se connecter aux URL communiquées.
6- Le service d'hébergement par l'intermédiaire du module de contrôle d'accès aux sites, demande à B de s'authentifier (B doit saisir son login et son mot de passe dans la session ouverte avec le serveur d'hébergement). Après vérification par le service d'hébergement de la validité de l'authentification dans la base utilisateur BU et du droit accordé par A auprès du module de gestion des URL/utilisateurs autorisés, B peut accéder au contenu de l'URL demandée.
7- On va envisager dans ce qui suit le cas où l'utilisateur B communique l'URL donnée par A vers des utilisateurs C inscrits ou non dans la base utilisateurs BU.
6- Si l'un des utilisateurs C se connecte à l'URL communiquée, le service d'hébergement par l'intermédiaire du module de contrôle d'accès aux sites demande à C de s'authentifier (saisie de login et mode de passe). Si C n'est pas inscrits dans la base des utilisateurs ou s'il est inscrit, mais qu'il n'a pas de droits d'accès enregistrés dans le module de gestion des URL/utilisateurs autorisés, il ne peut pas accéder au contenu de l'URL.

Selon le procédé, il est possible a tout moment, pour un utilisateur du service d'hébergement, de modifier les informations concernant les droits d'accès qu'il a accordé pour son site, dans le module de contrôle d'accès aux sites.

Même si un utilisateur B a déjà consulté une URL, on peut modifier ses droits d'accès et interdire toute consultation ultérieure.

Une amélioration du mécanisme proposé consiste à étendre le contrôle d'accès en y ajoutant à l'information droits d'accès, une donnée représentant la validité temporelle des droits accordés. Il est alors possible, par exemple, d'interdire tout accès après 10 jours ou de ne l'autoriser qu'entre 8 : 00 et 19 :00 heures.

On va maintenant décrire à titre d'exemple, le fonctionnement dans le cas où les URL sont transmises par courrier électronique (e-mail) illustré par la figure 2.

Ce cas de fonctionnement s'appuie bien entendu sur le mécanisme précédemment décrit. L'URL est transmise dans un message électronique envoyé depuis un module d'envoi de messages ME classique en soi, couplé aux modules d'hébergement H de sites et de gestion des URL/utilisateurs autorisés.

On prendra le cas pour simplifier où l'adresse électronique du destinataire est gérée par une messagerie MW qui utilise la même base utilisateur BU que les autres modules G, H, CA. Ainsi, de nombreuses opérations sont faites par ces modules et les utilisateurs bénéficient d'un plus grand confort de navigation. Le contrôle est fait de manière plus transparente pour les utilisateurs.
1- L'utilisateur A s'inscrit dans la base utilisateur BU.
2- Il compose un site personnel sur le service d'hébergement.
3- Il compose un message électronique et y insère l'URL du site créé.
   Il choisit un ou des destinataires B également inscrits dans la base utilisateurs. Si les destinataires ne sont pas inscrits, ils recevront bien le message et l'URL, mais ne pourront pas y accéder.
4- Avant envoi du message, les correspondances URL/utilisateurs autorisés sont enregistrés dans le module correspondant.
5- Le message est envoyé vers l'adresse du destinataire B qui est géré par la messagerie Web.
6- L'utilisateur B se connecte sur la messagerie Web et s'authentifie (saisie du couple login et mot de passe ou autres). La messagerie Web vérifie la validité de l'authentifiant et permet le cas échéant la consultation du message reçu.
   Le mécanisme d'authentification repose de manière classique sur l'utilisation de cookies qui contiennent des informations sur la validité de l'authentification. Le format utilisé et les mécanismes sont communs à la messagerie Web et au contrôle d'accès aux sites.
7- L'utilisateur B clique sur l'URL du message. Le service d'hébergement par l'intermédiaire du module de contrôle d'accès aux sites vérifie les droits de B en consultant le module de gestion des URL/utilisateurs autorisés B est authentifié grâce aux informations présentes dans le cookie déposé par la messagerie Web. B peut accéder au contenu de l'URL.
8- B transfère le message de A vers des utilisateurs C inscrits ou pas dans la base utilisateurs.
9- C consulte le message sur la messagerie Web après authentification (8).
   C clique sur l'URL du message. Les informations contenues dans un témoin (information concernant l'utilisateur et qui est plus couramment connue par la terminologie anglo-saxonne de « cookie ») permettent au module de contrôle d'accès aux sites de l'identifier. C ne fait pas partie des utilisateurs autorisés. L'accès au site est refusé.
11- Avantageusement même si l'adresse électronique des destinataires ne fait pas partie de celles gérées par la messagerie Web, le mécanisme décrit reste valable. En effet dans ce cas, le module de contrôle d'accès aux sites n'utilise pas les cookies pour authentifier l'utilisateur, mais lui demande de saisir son login et mode de passe. Il en vérifie la validité en interrogeant la base utilisateur BU.

## Revendications

1. Procédé de contrôle d'accès à un site Internet à partir de l'adresse de ce site, **caractérisé en ce qu'**il consiste à :
- enregistrer lesdits sites dans un service d'hébergement,
- enregistrer des informations d'identification d'utilisateurs du service d'hébergement et des informations pour chacun desdits utilisateurs comprenant des droits d'accès à un ou plusieurs des sites hébergés,
- vérifier pour toute demande d'accès à une adresse d'un site hébergé si cette demande émane d'un utilisateur enregistré et si cet utilisateur a des droits pour l'accès à cette adresse.

2. Procédé de contrôle d'accès selon la revendication 1, **caractérisé en ce qu'**une demande d'accès à une adresse d'un site hébergé résulte d'une sélection de ladite adresse dans un message électronique.

3. Procédé de contrôle d'accès selon la revendication 1 ou 2, **caractérisé en ce qu'**il consiste à :
- effectuer une mise à jour des enregistrements des utilisateurs et des informations sur les droits qui leurs sont accordés.

4. Procédé de contrôle d'accès selon l'une quelconque des revendications précedentes, **caractérisé en ce que** les informations sur les droits accordés comportent la ou les adresses des sites accessibles.

5. Procédé de contrôle d'accès selon la revendication 4, **caractérisé en ce que** les informations sur les droits accordés comportent outre la ou les adresses, une donnée représentant une durée de validité du droit accordé.

6. Dispositif de contrôle d'accès à des adresses de sites Internet, **caractérisé en ce qu'**il comprend :
- des moyens d'hébergement (H) pour enregistrer lesdits sites et fournir un service d'hébergement,
- des moyens (BU, CA) pour enregistrer des informations d'identification d'utilisateurs du service d'hébergement et des informations pour chacun desdits utilisateurs comprenant des droits d'accès à un ou plusieurs des sites hébergés,
- des moyens (G) pour vérifier pour toute demande d'accès à une adresse d'un site hébergé si cette demande émane d'un utilisateur enregistré et si cet utilisateur a des droits pour l'accès à cette adresse.

7. Dispositif de contrôle d'accès selon la revendication 6, **caractérisé en ce que** les moyens d'hébergement (H) sont réalisés par un serveur constituant le service d'hébergement.

8. Dispositif de contrôle d'accès selon la revendication 6, **caractérisé en ce que** les moyens pour enregistrer des informations d'identification sont réalisés par un serveur constituant une base de données utilisateurs (BU).

9. Dispositif de contrôle d'accès selon l'une quelconques des revendications précédentes, **caractérisé en ce que** les moyens pour vérifier les demandes d'accès sont réalisés par un serveur (G).

10. Dispositif de contrôle d'accès selon la revendication 9, **caractérisé en ce que** les serveurs sont des serveurs distincts reliés physiquement et logiquement entre eux.

11. Serveur d'hébergement (H) de sites Internet **caractérisé en ce qu'**il comprend des moyens de couplage à un serveur (BU) constituant une base utilisateurs contenant des informations d'identification d'utilisateurs du service hébergement et des informations pour chacun desdits utilisateurs, comprenant des droits d'accès à un ou plusieurs sites hébergés, et des moyens de couplage à un serveur (G) comprenant un module de gestion des adresses des sites et des droits d'accès à ces adresses pour chaque utilisateur de la base, ce serveur étant destiné à vérifier pour toute demande d'accès d'une adresse d'un site hébergé si cette demande émane d'un utilisateur enregistré et si cet utilisateur a des droits pour l'accès à cette adresse.

12. Serveur de gestion (G), **caractérisé en ce qu'**il comprend des moyens de couplage à un serveur d'hébergement (H) de sites Internet, un module de gestion des adresses de sites Internet et d'informations concernant des droits d'accès à ces adresses pour des utilisateurs, ce serveur de gestion (G) étant destiné à vérifier pour toute demande d'accès à une adresse d'un site hébergé si cette demande émane d'un utilisateur enregistré et si cet utilisateur a des droits pour l'accès à cette adresse, et des moyens de couplage à un serveur (BU) sur lequel sont enregistrées des informations d'identification desdits utilisateurs, ce serveur constituant une base utilisateurs, contenant des informations d'identification d'utilisateurs du service hébergement et des informations pour chacun desdits utilisateurs comprenant des droits d'accès à un ou plusieurs sites hébergés.

13. Serveur de base utilisateurs (BU), **caractérisé en ce qu'**il comprend des moyens d'enregistrement d'informations d'identification d'utilisateurs d'un service d'hébergement de sites Internet et des informations pour chacun desdits utilisateurs comprenant les droits d'accès à un ou plusieurs sites hébergés, des moyens de couplage à un serveur (H) assurant ledit service d'hébergement et des moyens de couplage à un serveur (G) comprenant un module de gestion des adresses de sites Internet hébergés et d'informations concernant des droits d'accès à ces adresses pour les utilisateurs, ce serveur étant destiné à vérifier pour toute demande d'accès à une adresse d'un site hébergé si cette demande émane d'un utilisateur enregistré et si cet utilisateur a des droits pour l'accès à cette adresse.

## Claims

1. Method of controlling access to an Internet site from the address of this site, **characterized in that** it consists in:
- registering said sites in a hosting service,
- registering information identifying users of the hosting service and information for each of the said users comprising rights of access to one or more of the hosted sites,
- verifying for any request for access to an address of a hosted site whether this request emanates from a registered user, and whether this user has rights for access to this address.

2. Method of controlling access according to Claim 1, **characterized in that** a request for access to an address of a hosted site results from a selection of the said address in an electronic message.

3. Method of controlling access according to Claim 1 or 2, **characterized in that** it consists in:
- performing an update of the registrations of the users and of the information on the rights accorded to them.

4. Method of controlling access according to any one of the preceding claims, **characterized in that** the information on the rights accorded comprise the address or addresses of the accessible sites.

5. Method of controlling access according to Claim 4, **characterized in that** the information on the rights accorded comprise in addition to the address or addresses, a data item representing a duration of validity of the right accorded.

6. Device for controlling access to addresses of Internet sites, **characterized in that** it comprises:
- means of hosting (H) for registering the said sites and for providing a hosting service,
- means (BU, CA) for registering information identifying users of the hosting service and information for each of the said users comprising rights of access to one or more of the hosted sites,
- means (G) for verifying for any request for access to an address of a hosted site whether this request emanates from a registered user and whether this user has rights for access to this address.

7. Device for controlling access according to Claim 6, **characterized in that** the hosting means (H) are embodied by a server constituting the hosting service.

8. Device for controlling access according to Claim 6, **characterized in that** the means for registering identifying information are embodied by a server constituting a user database (BU).

9. Device for controlling access according to any one of the preceding claims, **characterized in that** the means for verifying the access requests are embodied by a server (G).

10. Device for controlling access according to Claim 9, **characterized in that** the servers are distinct servers linked together physically and logically.

11. Server (H) for hosting Internet sites, **characterized in that** it comprises means of coupling to a server (BU) constituting a user base containing information identifying users of the hosting service and information for each of the said users, comprising rights of access to one or more hosted sites, and means of coupling to a server (G) comprising a module for managing the addresses of the sites and rights of access to these addresses for each user of the base, this server being intended to verify for any request for access of an address of a hosted site whether this request emanates from a registered user and whether this user has rights for access to this address.

12. Management server (G), **characterized in that** it comprises means of coupling to a server (H) for hosting Internet sites, a module for managing the addresses of Internet sites and information concerning rights of access to these addresses for users, this management server (G) being intended to verify for any request for access to an address of a hosted site whether this request emanates from a registered user and whether this user has rights for access to this address, and means of coupling to a server (BU) on which are registered information identifying the said users, this server constituting a user base, containing information identifying users of the hosting service and information for each of the said users comprising rights of access to one or more hosted sites.

13. User base server (BU), **characterized in that** it comprises means for registering information identifying users of a service hosting Internet sites and information for each of the said users comprising the rights of access to one or more hosted sites, means of coupling to a server (H) affording the said hosting service and means of coupling to a server (G) comprising a module for managing the addresses of hosted Internet sites and information concerning rights of access to these addresses for the users, this server being intended to verify for any request for access to an address of a hosted site whether this request emanates from a registered user and whether this user has rights for access to this address.

## Patentansprüche

1. Zugriffskontrollverfahren zu einer Internetseite ausgehend von der Adresse dieser Seite, **dadurch gekennzeichnet, dass** es darin besteht:
- die Seiten in einem Hosting-Dienst zu speichern,
- Identifizierungsinformationen von Benutzern des Hosting-Diensts und Informationen für jeden der Benutzer zu speichern, die Zugriffsrechte zu einer oder mehreren der gehosteten Seiten enthalten,
- für jede Zugriffsanforderung zu einer Adresse einer gehosteten Seite zu prüfen, ob diese Anforderung von einem gespeicherten Benutzer stammt und ob dieser Benutzer Zugriffsrechte zu dieser Adresse besitzt.

2. Zugriffskontrollverfahren nach Anspruch 1, **dadurch gekennzeichnet, dass** eine Zugriffsanforderung zu einer Adresse einer gehosteten Seite sich aus einer Auswahl der Adresse in einer elektronischen Mitteilung ergibt.

3. Zugriffskontrollverfahren nach Anspruch 1 oder 2, **dadurch gekennzeichnet, dass** es darin besteht:
- eine Aktualisierung der Speicherungen der Benutzer und der Informationen über die ihnen gewährten Rechte durchzuführen.

4. Zugriffskontrollverfahren nach einem der vorhergehenden Ansprüche, **dadurch gekennzeichnet, dass** die Informationen über die gewährten Rechte die Adresse(n) der zugänglichen Seiten enthalten.

5. Zugriffskontrollverfahren nach Anspruch 4, **dadurch gekennzeichnet, dass** die Informationen über die gewährten Rechte außer der oder den Adresse(n) einen Datenwert enthalten, der eine Gültigkeitsdauer des gewährten Rechts darstellt.

6. Zugriffskontrollvorrichtung zu Adressen von Internetseiten, **dadurch gekennzeichnet, dass** sie aufweist:
- Hosting-Mittel (H), um die Seiten zu speichern und einen Hosting-Dienst zu liefern,
- Mittel (BU, CA), um Identifizierungsinformationen von Benutzern des Hosting-Diensts und Informationen für jeden der Benutzer zu speichern, die Zugriffsrechte zu einer oder mehreren der gehosteten Seiten enthalten,
- Mittel (G), um für jede Zugriffsanforderung zu einer Adresse einer gehosteten Seite zu prüfen, ob diese Anforderung von einem gespeicherten Benutzer kommt und ob dieser Benutzer Zugriffsrechte zu dieser Adresse hat.

7. Zugriffskontrollvorrichtung nach Anspruch 6, **dadurch gekennzeichnet, dass** die Hosting-Mittel (H) von einem Server realisiert werden, der den Hosting-Dienst bildet.

8. Zugriffskontrollvorrichtung nach Anspruch 6, **dadurch gekennzeichnet, dass** die Mittel zum Speichern der Identifizierungsinformationen von einem Server realisiert werden, der eine Benutzerdatenbasis (BU) bildet.

9. Zugriffskontrollvorrichtung nach einem der vorhergehenden Ansprüche, **dadurch gekennzeichnet, dass** die Mittel zur Prüfung der Zugriffsanforderungen von einem Server (G) realisiert werden.

10. Zugriffskontrollvorrichtung nach Anspruch 9, **dadurch gekennzeichnet, dass** die Server unterschiedliche Server sind, die physisch und logisch miteinander verbunden sind.

11. Hosting-Server (H) von Internetseiten, **dadurch gekennzeichnet, dass** er Mittel zur Kopplung an einen Server (BU), der eine Benutzerbasis bildet, die Identifizierungsinformationen von Benutzern des Hosting-Diensts und Informationen für jeden der Benutzer enthält, die Zugriffsrechte zu einer oder mehreren gehosteten Seiten enthalten, und Mittel zur Kopplung an einen Server (G) aufweist, der einen Verwaltungsmodul der Adressen der Seiten und der Zugriffsrechte zu diesen Adressen für jeden Benutzer der Basis enthält, wobei dieser Server dazu bestimmt ist, für jede Zugriffsanforderung zu einer Adresse einer gehosteten Seite zu prüfen, ob diese Anforderung von einem gespeicherten Benutzer kommt und ob dieser Benutzer Zugriffsrechte zu dieser Adresse hat.

12. Verwaltungsserver (G), **dadurch gekennzeichnet, dass** er Mittel zur Kopplung an einen Hosting-Server (H) von Internetseiten, einen Verwaltungsmodul der Adressen von Internetseiten und von Informationen betreffend Zugriffsrechte zu diesen Adressen für Benutzer, wobei dieser Verwaltungsserver (G) dazu bestimmt ist, für jede Zugriffsanforderung zu einer Adresse einer gehosteten Seite zu prüfen, ob diese Anforderung von einem gespeicherten Benutzer kommt und ob dieser Benutzer Zugriffsrechte zu dieser Adresse hat, und Mittel zur Kopplung an einen Server (BU) aufweist, in dem Identifizierungsinformationen der Benutzer gespeichert sind, wobei dieser Server eine Benutzerbasis bildet, die Identifizierungsinformationen von Benutzern des Hosting-Diensts und Informationen für jeden der Benutzer enthält, die Zugriffsrechte zu einer oder mehreren gehosteten Seiten enthalten.

13. Benutzerbasisserver (BU), **dadurch gekennzeichnet, dass** er Mittel zur Speicherung von Identifizierungsinformationen von Benutzern eines Hosting-Dienstes von Internetseiten und Informationen für jeden der Benutzer, die die Zugriffsrechte zu einer oder mehreren gehosteten Seiten enthalten, Mittel zur Kopplung an einen Server (H), der den Hosting-Dienst gewährleistet, und Mittel zur Kopplung an einen Server (G) aufweist, der einen Verwaltungsmodul der Adressen von gehosteten Internetseiten und von Informationen betreffend Zugriffsrechte zu diesen Adressen für die Benutzer enthält, wobei dieser Server dazu bestimmt ist, für jede Zugriffsanforderung zu einer Adresse einer gehosteten Seite zu prüfen, ob diese Anforderung von einem gespeicherten Benutzer kommt und ob dieser Benutzer Zugriffsrechte zu dieser Adresse hat.
